# EUROPEAN PATENT SPECIFICATION

(11) **EP 0 421 468 B1**
(45) Date of publication and mention of the grant of the patent: **17.01.1996**
(21) Application number: 90119171.8
(22) Date of filing: 05.10.1990
(51) Int. Cl.: B01D 53/86

(54) **Catalytic oxidation of ammonia**
Katalytische Oxidation von Ammoniak
Oxydation catalytique de l'ammoniac

(30) Priority: 05.10.1989 JP 260713/89
(43) Date of publication of application: 10.04.1991
(73) Proprietor: NKK CORPORATION, Tokyo (JP)
(72) Inventor: Shikada, Tsutomu, Chiyoda-ku, Tokyo (JP); Asanuma, Minoru, Chiyoda-ku, Tokyo (JP); Tachibana, Yokudo, Chiyoda-ku, Tokyo (JP)
(74) Representative: Grünecker, Kinkeldey, Stockmair & Schwanhäusser Anwaltssozietät

(56) References cited:
- EP-A- 0 310 584
- DE-A- 2 824 534
- FR-A- 2 189 320
- FR-A- 2 327 814
- GB-A- 2 009 120
- JAPANESE PATENTS GAZETTE, Section Ch, Week A11, 24 April 1978, Derwent Publications Ltd., London (GB); class J, p. 3, no. 20186a/11

## Description

This invention relates to a catalytic oxidation process of ammonia, and more particularly, relates to a catalytic oxidation process of ammonia by contacting the ammonia recovered from coke oven gas with a particular catalyst in a fluidized state in the presence of oxygen gas such as contained in air to decompose it to nitrogen gas and water.

The gas generated from coke oven contains 6 to 10 g/Nm³ of ammonia. Since the ammonia corrodes piping as well as causes to generate NOₓ through the combustion of the coke oven gas, it is necessary to be removed. A conventional method of removing ammonia from coke oven gas (COG) is conducted by washing the COG with dilute sulfuric acid to recover the ammonia as ammonium sulfate. However, the demand of ammonium sulfate for fertilizer shaply decreased, and the market price greatly lowered. As a result, the payability is remarkably inferior, and the ammonia removing process by the production of ammonium sulfate is now almost worthless in the industrial viewpoint. At present, the ammonium sulfate production process is reduced, and changed to other processes such as the Phosam process to produce highly pure liquid ammonia, the Koppers process to separate ammonia followed by direct combustion or the Carl Still process to burn in the presence of a catalyst. In the Carl Still process (Aromatics, vol. 29, No. 6, pp 7-12, 1977), ammonia in COG is absorbed by water or aqueous ammonia, and the aqueous ammonia is distilled to evaporate ammonia vapor. The ammonia vapor is burned completely in an combustion furnace for decomposition of ammonia at about 1000°C together with COG and air in the presence of catalyst. The heat of the exhaust gas of the combustion furnace is recovered, and then discharged to the atmosphere. The conventional processes have the following problems. In the conventional combustion processes, it is necessary to use heat-resistant materials for the reactor. Moreover, in the case of the direct combustion process, it is difficult to inhibit the production of NOₓ. On the other hand, in the case of the catalytic combustion process, severe conditions are employed compared with usual catalytic reactions, and the catalyst employed is therefore a special heat-resistant catalyst. The concentration of generated NOₓ is high, about 50 ppm.

FR-A-2 189 320 relates to the elimination of ammonia and organic impurities from an ammomia production plant effluent comprising oxidizing the ammonia and organic impurities by contacting with an oxidation catalyst at a temperature of 200 to 760 °C.

From FR-A-2 327 814 a process for treating an off gas containing gaseous ammonia and gaseous oxygen comprising the use of a catalyst consisting essential of oxides of titanium and copper and one compound selected from the oxides of molybdenum, tungsten, vanadium, iron, cerium or mixtures thereof, and contacting the off gas with the catalyst at a space velocity of 1000 to 100,000 h⁻¹ at a temperature of about 300 to 400 °C to obain nitrogen and water is known.

The catalytic oxidation of ammonia by passing a gaseous mixture containing ammonia and either air or oxygen at an elevated temperature of 550 to 650 °C through particles of a catalyst comprising one or more metals of the platinum group is known from GB-A-2 009 120. In this process the mixture is passed at a flow rate such that said particles constitute a fluidized bed.

It is the object of the present invention to provide a process to treat ammonia capable of inhibiting the generation of NOₓ inexpensively and requiring no heat-resistant material for the reactor nor special heat-resistant catalyst.

According to the present invention this object is attained with a process for decomposing an aqueous ammonia vapour recovered from coke oven gas through catalytic oxidation in the presence of oxygen gas, the concentration ratio of oxygen gas to ammonia (0₂/NH₃) being more than 0.75 which comprises contacting a catalyst containing at least copper oxide and/or vanadium oxide supported on a carrier selected from the group consisting of alumina, silica gel, silica-alumina and alumina-titania with said ammonia vapour in a fluidized state at a reaction temperature of 400 to 600°C. Preferred embodiments of the present invention are set forth in the dependent claims.

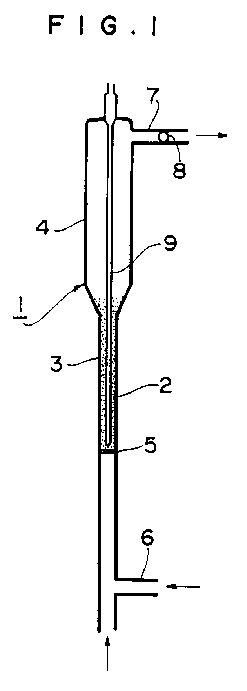

Figure 1 is a sectional view of an example of the reactor used in the process of the invention.

The fluidized bed catalyst used in the invention is necessary to have a high strength and a great specific surface area, and for that purpose, the catalyst is preferably prepared by supporting the catalytic active component on a carrier having a high strengh and a high specific surface area. Thus, the carrier is selected from the group consisting of alumina, silica gel, silica-alumina and alumina-titania the alumina on which titantia is supported or deposited being preferred.

In the case of the alumina-titania carrier, the alumina used for the production of this carrier may be usual for catalysts, and the rate of titania to alumina is preferably 0.01 to 0.5, more preferably 0.02 to 0.3, by weight. As the method of producing the carrier, graded alumina grains are impregnated in a suitable aqueous titanium salt solution. The titanium salt is enough to be water-soluble, and may be either of a salt of an inorganic acid or a salt of an organic acid. A suitable titanium salt is titanium sulfate. As to the concentration of the titanium salt, about 0.1 to 1.5 M is preferred. After the titanium salt solution sufficiently permeates the pores of the alumina, if necessary, the excess solution is removed, and then evaporated to dryness. When the water on the surface of the alumina evaporates, i.e., when the total quantity of the titanium salt solution is concentrated in the pores of the alumina, the alumina is contacted with a base solution. The base is capable of reacting with the acid portion forming the titanium salt to produce a water-soluble salt, and the base itself is removed in the calcination process by the thermal decomposition to volatilize. Preferable bases are, e.g., ammonia, urea and organic bases, and ammonia is particularly preferred. A suitable concentration of the base is about 0.5 to 3 N. By adding the base solution, the titanium salt solution is hydrolyzed in the pores of alumina, and titanium hydroxide precipitates on the face of the pores. The alumina is washed with water such as purified by ion exchangers to remove base ions and acid ions, and then dried followed by calcining. The calcination may be conducted in the atmosphere, and the calcination temperature is capable of converting titanium hydroxide (Ti(OH)₄) into titanium oxide (TiO₂) and pyrolyzing the base to volatilize, for example 300 to 600°C.

The catalytic active component is copper oxide or vanadium oxide or a mixture thereof. The copper oxide is CuO, Cu₂O or a mixture thereof. The vanadium oxide is V₂O₅, and may contain V₂O₄ or the like. The total content of copper oxide and vanadium oxide is preferably 1 to 60 wt. %, more preferably 1 to 30 wt. %.

As the method of supporting copper oxide and vanadium oxide, usual impregnation methods of a soluble salt of each metal can be utilized. That is, in the case of copper oxide, the carrier material is impregnated in an aqueous solution of a water-soluble copper salt of which the acid portion is pyrolyzed to volatilize, such as copper nitrate. Similarly, in the case of vanadium oxide, the carrier material is impregnated in an aqueous solution of a vanadate of which the base portion is pyrolyzed to volatilize, such as ammonium vanadate. When both of copper oxide and vanadium oxide are supported on the same carrier, either of them may be first supported, or both of them may be supported simultaneously by using a mixture solution. Besides copper oxide and vanadium oxide, other metal oxides or compounds can be supported.

The catalyst composition prepared as above is dried in air at 90 to 150°C for 12 to 36 h, and, if necessary, then calcined according to a conventional method. The calcination is preferably conducted by heating nitrogen gas or air at 350 to 600°C for 1 to 10 h.

The catalyst is used in a fluidized bed reactor. The grain size may be varied according to, e.g., the reaction conditions, and it may be a powder or a sphere, crushed or granules having a diameter of millimeters.

The ammonia treated in the process of the invention is recovered from a coke oven. The recovering method may be conventional, and for example, absorption by water, aqueous sulfuric acid solution or aqueous phosphoric acid solution is applicable. The composition of the recovered ammonia vapor is, for example, about 10 to 25 % of ammonia, about 2 to 10 % of carbon dioxide gas and about 60 to 90 % of water vapor.

Oxygen gas is added to the ammmonia vapor recovered from COG, and decomposed by catalytic oxidation. When air is used as the oxygen source, a suitable mixing rate of air to the ammonia vapor is so that the concentration ratio of oxygen gas to ammonia (O₂/NH₃) of the mixed gas is more than 0.75, preferably 0.75 to 1.5.

As to the reaction conditions, the reaction temperature is 400 to 600°C, preferably 500 to 550°C. While, the reaction pressure is not restricted, and may be ordinary pressure, increased pressure or reduced pressure, such as in the range of 5x10⁴ to 100x10⁴ Pa (0.5 to 10 atm).

In the process of the invention, ammonia gas is decomposed by catalytic oxidation to produce N₂ and H₂O. According to the catalytic conditions, a small amount of nitrogen oxide such as N₂O is by-produced. The reaction temperature is low at 400 to 600°C, and the generation of NOₓ is extremely small in quantity, due to the use of copper oxide and/or vanadium oxide catalyst. To conduct oxidative decomposition of ammonia in a fluidized bed is advantageous to the fixed bed process in the following points. That is, since the reaction heat generated by the oxidative decomposition of ammonia is dispersed, local heating of the catalyst layer does not occur, and the reaction temperature is easily kept uniform and controlled. Since the contact of the reaction gas with the catalyst efficiently occurs, the oxidative decomposition rate of ammonia is high. Since the reaction proceeds at a low temperature and since the reaction temperature is uniform, the generation of NOₓ is inhibited. Moreover, since ammonia concentration can be rendered high, the reactor can be made compact.

### EXAMPLES

### Example 1

The catalyst was pepared as follows. 150.0 g 24 wt. % titanium sulfate (Ti(SO₄)₂) aqueous solution were dissolved in about 200 mℓ of water, and 48.0 g of alumina ("DC-2282", Dia Catalyst) graded into 75 to 106 µm in diameter were suspended in the solution. The water content of the suspension was evaporated on a water bath, and the residue was put in 300 mℓ of 1 moℓ/ℓ ammonia aqueous solution. After allowing to stand for 30 min, the alumina was washed until ammonium ion and sulfate ion were not detected. Subsequently, the alumina was dried in air at 120°C for 24 h, and then treated at 500°C for 3 h in air to obtain TiO₂-Al₂O₃ carrier (the ratio by weight of TiO₂ : Al₂O₃ was 1 : 9).

47.5 g of the TiO₂-Al₂O₃ carrier were put in an aqueous solution prepared by dissolving 3.21 g of ammonium metavanadate (NH₄VO₃) and 7.0 g of oxalic acid ((COOH)₂) in about 300 mℓ of water, and evaporated to dryness. The residue was dried at 120°C for 24 h, and calcined in air at 500°C for 3 h. Subsequently, 40 g of the calcined material were put in an aqueous solution prepared by dissolving 6.07 g of copper nitrate (Cu(NO₃)₂) in 300 mℓ of water, and evaporated to dryness. After drying, the dried material was calcined in air at 500°C for 3 h to obtain the object catalyst having a composition that the ratio by weight of CuO : V₂O₅ : TiO₂ : Al₂O₃ is 5 : 5 : 18 : 72.

The reactor shown in Figure 1 was used. The reactor 1 was made of silica, and formed cylindrical having two diameter portions. The lower part was a small diameter portion 3 having an inside diameter of 13 mm in order to increase the fluidity of the catalyst 2 by elevating the flow velocity of gas. While, the upper part was a large diameter portion 4 having an inside diameter of 41 mm in order to prevent the escape of the catalyst by decreasing the flow velocity of gas. The total height was 550 mm, and the height of the large diameter portion 4 containing the enlarging portion was 190 mm. The small diameter portion 3 was divided by the catch basin portion 5 made of glass filter to prevent dropping of the catalyst located slightly higher than the center, and the height of the part upper than the catch basin portion 5 was 120 mm. A branched pipe 6 was connected to the part lower than the catch basin portion 5. Ammonia vapor was supplied through the lower end opening of the small diameter portion, and while, air was supplied from the branched pipe 6. An exhaust pipe 7 of the reaction gas was connected to the vicinity of the upper end of the large diameter portion 4, and a sampling pipe 8 was connected to the exhaust pipe 7. The upper end of the large diameter portion 4 was closed, and a sheath pipe 9 for inserting a thermocouple for measuring temperature was extended from the center of the closed upper end to the vicinity of the catch basin portion 5.

2.5 mℓ of the above catalyst and 3.0 mℓ of the above TiO₂-Al₂O₃ were put in the above fluidized bed reactor shown in Figure 1. The ammonia vapor at 80°C having a composition shown in Table 1 was supplied from the lower end opening of the small diameter portion at a flow velocity of 395 mℓ/min, and 84 mℓ/min of oxygen gas at 25°C and 750 mℓ/min of helium gas at 25°C were supplied from the branched pipe 6. After preheating, the reaction was conducted at the reaction temperature of 524°C under atmospheric pressure. The space velocity converted into that at ordinary temperature was 28,000 mℓ/mℓ·h.

**Table 1**

| Component | Concentration |
|---|---|
| NH₃ | 30.0 vol. % |
| CO₂ | 10.0 vol. % |
| H₂O | 59.35 vol. % |
| H₂S | 5000 ppm |
| Sulfuric acid mist | 100 ppm |
| Phenols | 1000 ppm |

The reaction products and unreacted materials were analyzed by gas chromatography and a chemiluminescence NO/NOₓ meter, and the results are shown in Table 2.

### Examples 2 to 5

The reactions were conducted as in Example 1, however, the reaction temperature and O₂/NH₃ ratio were changed.

The results are summarized in Table 2.

### Example 6

3 mℓ of the catalyst prepared in Example 1 were put in the same reactor as employed in Example 1. The same ammonia vapor at 80°C having a composition shown in Table 1 was supplied from the lower end opening at a flow velocity of 553 mℓ/min, and 670 mℓ/min of air at 25°C were supplied from the branched pipe 6. After preheating, the reaction was conducted at the reaction temperature of 529°C under atmospheric pressure. The space velocity converted into that at ordinary temperature was 25,500 mℓ/mℓ·h.

The results are shown in Table 2.

**Table 2**

| Example | O₂/NH₃ (Molar Ratio) | Reaction Temperature (°C) | Conversion of NH₃(%) | NOₓ Conc. (ppm) |
|---|---|---|---|---|
| 1 | 0.84 | 524 | 100 | 3 |
| 2 | 0.84 | 502 | 95.4 | 2 |
| 3 | 1.01 | 532 | 100 | 4 |
| 4 | 1.01 | 500 | 88.3 | 1 |
| 5 | 1.09 | 502 | 100 | 34 |
| 6 | 1.00 | 529 | 100 | 2 |

## Claims

1. A process for decomposing an aqueous ammonia vapour recovered from coke oven gas through catalytic oxidation in the presence of oxygen gas, the concentration ratio of oxygen gas to ammonia (0₂/NH₃) being more than 0.75 which comprises contacting a catalyst containing at least copper oxide and/or vanadium oxide supported on a carrier selected from the group consisting of alumina, silica gel, silica-alumina and alumina-titania with said ammonia vapour in a fluidized state at a reaction temperature of 400 to 600°C.

2. The process of claim 1 wherein the carrier is selected from alumina, silica gel and silica-alumina.

3. The process of claim 1 wherein the carrier is an alumina-titania carrier.

4. The process of claim 3 wherein the ratio by weight of titania to alumina is 0.01 to 0.5.

5. The process of claim 1 wherein said copper oxide is CuO, Cu₂0 or a mixture thereof and said vanadium oxide is V₂0₅ or a mixture of V₂0₅ and V₂0₄.

6. The process of claim 1 wherein the reaction pressure is 5x10⁴ to 100x10⁴Pa (0.5 to 10 atm).

## Patentansprüche

1. Verfahren zur Zersetzung eines wäßrigen Ammoniakdampfes, der aus Koksofengas gewonnen wird, durch katalytische Oxidation in Gegenwart von Sauerstoffgas, wobei das Konzentrationsverhältnis des Sauerstoffgases zum Ammoniak (O₂/NH₃) mehr als 0,75 beträgt, wobei das Verfahren das Inkontaktbringen eines Katalysators, der mindestens Kupferoxid und/oder Vanadinoxid, aufgebracht auf einen Träger, ausgewählt aus der Gruppe, bestehend aus Aluminiumoxid, Silikagel, Siliciumoxid-Aluminiumoxid und Aluminiumoxid-Titanoxid, enthält, mit dem Ammoniakdampf im fluidisierten Zustand bei einer Reaktionstemperatur von 400 bis 600°C umfaßt.

2. Verfahren nach Anspruch 1, worin der Träger ausgewählt ist aus Aluminiumoxid, Silikagel und Siliciumoxid-Aluminiumoxid.

3. Verfahren nach Anspruch 1, worin der Träger ein Aluminiumoxid-Titanoxid-Träger ist.

4. Verfahren nach Anspruch 3, worin das Gewichtsverhältnis von Titanoxid zu Aluminiumoxid 0,01 bis 0,5 beträgt.

5. Verfahren nach Anspruch 1, worin das Kupferoxid CuO, Cu₂O oder ein Gemisch davon ist und das Vanadinoxid V₂O₅ oder ein Gemisch von V₂O₅ und V₂O₄ ist.

6. Verfahren nach Anspruch 1, worin der Reaktionsdruck 5x10⁴ bis 100x10⁴ Pa (0,5 bis 10 Atm) beträgt.

## Revendications

1. Procédé pour décomposer une vapeur aqueuse d'ammoniac récupérée du gaz d'un four à coke par oxydation catalytique en présence de gaz oxygène, le rapport de concentration du gaz oxygène à l'ammoniac (O₂/NH₃) étant supérieur à 0,75, qui comprend la mise en contact d'un catalyseur contenant au moins de l'oxyde de cuivre et/ou de l'oxyde de vanadium déposé(s) sur un support choisi dans le groupe constitué de l'alumine, du gel de silice, de silice-alumine et d'alumine-oxyde de titane avec ladite vapeur d'ammoniac dans un état fluidisé, à une température de réaction de 400 à 600 °C.

2. Procédé selon la revendication 1, dans lequel le support est choisi parmi l'alumine, le gel de silice et silice-alumine.

3. Procédé selon la revendication 1, dans lequel le support est un support alumine-oxyde de titane.

4. Procédé selon la revendication 3, dans lequel le rapport pondéral de l'oxyde de titane à l'alumine est 0,01 à 0,5.

5. Procédé selon la revendication 1, dans lequel ledit oxyde de cuivre est CuO, Cu₂O ou un mélange de ceux-ci, et ledit oxyde de vanadium est V₂O₅ ou un mélange de V₂O₅ et de V₂O₄.

6. Procédé selon la revendication 1, dans lequel la pression de réaction est 5 x 10⁴ à 100 x 10⁴ Pa (0,5 à 10 atmosphères).
